# EUROPÄISCHE PATENTSCHRIFT

(11) **EP 3 544 080 B1**
(45) Veröffentlichungstag und Bekanntmachung des Hinweises auf die Patenterteilung: **24.02.2021**
(21) Anmeldenummer: 19000106.5
(22) Anmeldetag: 28.02.2019
(51) Int. Cl.: H01M 2/10, H01M 2/20, H01M 2/30

(54) **BATTERIEZELLENEINHEIT FÜR BATTERIEMODULE**
BATTERY CELL UNIT FOR BATTERY MODULES
UNITÉ D'ÉLÉMENT DE BATTERIE POUR MODULES DE BATTERIE

(30) Priorität: 21.03.2018 DE 102018002334
(43) Veröffentlichungstag der Anmeldung: 25.09.2019
(73) Patentinhaber: Voltabox AG, 33129 Delbrück (DE)
(72) Erfinder: Stichling, Jochen, 59269 Beckum (DE); Werth, Constantin, 33106 Paderborn-Wewer (DE)
(74) Vertreter: Lelgemann, Karl-Heinz

(56) Entgegenhaltungen:
- EP-A2- 3 093 901
- WO-A2-2015/113854
- DE-U1-212013 000 154

## Beschreibung

Die Erfindung bezieht sich auf eine Batteriezelleneinheit für Batteriemodule, mit einer Batteriezelle, einem Zellrahmen, in den die Batteriezelle eingefügt ist, einem Zellpol, der einerseits an die Batteriezelle angeschlossen ist und mit seinem batteriezellenfernen Endabschnitt aus der Batteriezelle vorsteht, und einem Verbindungsteil, an das der batteriezellenferne Endabschnitt des Zellpols angeschlossen ist und mittels dem die Batteriezelle mit benachbarten Batteriezellen des Batteriemoduls verbindbar ist.

Ausgehend von dem vorstehend geschilderten Stand der Technik liegt der Erfindung die Aufgabe zugrunde, eine entsprechende Batteriezelleneinheit für Batteriemodule zur Verfügung zu stellen, deren Montage und Demontage mit den sie an benachbarte Batteriezelleneinheiten anschließenden Verbindungsteilen erheblich vereinfacht ist und bei der langfristig eine zuverlässige Anschlussverbindung zwischen den Verbindungsteilen und den batteriezellenfernen Endabschnitten der Zellpole gesichert ist.

Diese Aufgabe wird erfindungsgemäß dadurch gelöst, dass der batteriezellenferne Endabschnitt des Zellpols in eine zur Hauptebene der Batteriezelle senkrecht angeordnete Anschlussebene gebogen ist, dass der batteriezellenferne Endabschnitt mit seiner Unterfläche flächig an der ihm zugewandten Oberfläche des Verbindungsteils in Anlage ist, dass unterhalb des Verbindungsteile eine schiefe Ebene ausgebildet ist, und dass zwischen der unterhalb des Verbindungsteils ausgebildeten schiefen Ebene und der Batteriezelle bzw. deren Zellrahmen ein Keilglied sitzt, dessen Schräge betragsgleich und invers zur Schräge der unterhalb des Verbindungsteils ausgebildeten schiefen Ebene ist. Bei der Montage des Verbindungsteils, die mittels seitlichem Einführen bzw. Einschieben geschehen kann, wird aufgrund der verbindungsteilseitigen schiefen Ebene und des batteriezelleneinheitsseitigen Keilglieds sichergestellt, dass während des seitlichen Einführens ein Höhenausgleich stattfindet. Beim seitlichen Einschieben des Verbindungsteils erfolgt die Annäherung des Verbindungsteils in seine letztliche Montagestellung translatorisch mit zwei Richtungsvektoren. Hierbei kann ein Höhenausgleich stattfinden, der für die herzustellende stoffschlüssige Verbindung zwischen dem Verbindungsteil und den Zellpolen wesentlich ist. Die Oberfläche des Verbindungsteils wird parallel von unten an die batteriezellenfernen Endabschnitte des Zellpols herangeführt. Mittels einer unterschiedlichen Anzahl von Anschlussabschnitten aufweisender Verbindungsteile, deren Kombination sowie einer daran angepassten Anzahl von Batteriezelleneinheiten lassen sich Batteriemodule beliebiger Kapazität zusammenstellen. Dies ist insbesondere beim Konzipieren von Fahrzeugantriebsbatterien von Bedeutung.

Gemäß einer vorteilhaften Weiterbildung der erfindungsgemäßen Batteriezelleneinheit ist die unterhalb des Verbindungsteils ausgebildete schiefe Ebene die Unterfläche eines Aufnahmeteils, auf dessen Oberfläche das Verbindungsteil gehaltert ist. Hierdurch ist es beispielsweise möglich, für die erfindungsgemäßen Batteriezelleneinheiten standardisierte Verbindungsteile zu verwenden, wobei eine Anpassung der Verbindungsteile an das jeweils konkret zusammenzustellende Batteriemodul mittels des Aufnahmeteils möglich ist.

Zur festen Verbindung zwischen Verbindungsteil einerseits und Aufnahmeteil andererseits ist es vorteilhaft, wenn das Verbindungsteil mittels Rastgliedern fest an der Oberfläche des Aufnahmeteils verrastet ist.

Die Batteriezelle der erfindungsgemäßen Batteriezelleneinheit kann vorteilhaft im Zellrahmen der Batteriezelleneinheit fixiert sein, wobei die Fixierung vorzugsweise dadurch realisiert sein kann, dass die Batteriezelle in den Zellrahmen eingeklebt, eingeklemmt und/oder eingedrückt wird.

Das Keilglied der erfindungsgemäßen Batteriezelleneinheit kann zweckmäßigerweise am Zellrahmen derselben montiert werden.

Alternativ ist es möglich, das Keilglied als einstückigen Bestandteil des Zellrahmens auszugestalten.

Um mechanische Belastungen, z.B. aufgrund von Vibrationen etc., der Anschlussverbindung zwischen den batteriezellenfernen Endabschnitten der Zellpole einerseits und dem Verbindungsteil andererseits auszuschließen bzw. zu minimieren, ist es vorteilhaft, wenn zwischen einem parallel zur Hauptebene der Batteriezelle aus dieser vorstehenden Abschnitt des Zellpols einerseits und dem hierzu rechtwinklig abgebogenen batteriezellenfernen Endabschnitt des Zellpols andererseits eine Entlastungskontur ausgebildet ist.

Im Folgenden wird die Erfindung anhand von Ausführungsformen unter Bezugnahme auf die Zeichnung näher erläutert.

Es zeigen:
- Figur 1: den für die Erfindung wesentlichen Abschnitt dreier erfindungsgemäßer Batteriezelleneinheiten, wobei ein mit diesen Batteriezelleneinheiten zusammen zu fügendes Verbindungsteil vor dem Zusammenfügen gezeigt ist;
- Figur 2: eine Figur 1 entsprechende Darstellung der Batteriezelleneinheiten während des Zusammenfügens von Verbindungsteil und Batteriezelleneinheiten;
- Figur 3: eine den Figuren 1 und 2 entsprechende Darstellung nach dem Zusammenfügen von Batteriezelleneinheiten und Verbindungsteil;
- Figur 4: eine Figur 1 entsprechende Darstellung einer Vielzahl von erfindungsgemäßen Batteriezelleneinheiten, die mittels zweier Verbindungsteile miteinander verbunden werden, wobei die Verbindungsteile vor ihrem Zusammenfügen mit den Batteriezelleneinheiten gezeigt sind;
- Figur 5: eine Figur 4 entsprechende Darstellung, bei der eines der beiden Verbindungsteile während des Zusammenfügens und das andere vor dem Zusammenfügen mit den Batteriezelleneinheiten gezeigt ist;
- Figur 6: eine den Figuren 4 und 5 entsprechende Darstellung, bei der ein Verbindungsteil im zusammengefügten und das andere Verbindungsteil vor dem Zusammenfügen gezeigt ist;
- Figur 7: eine den Figuren 4 bis 6 entsprechende Darstellung, wobei ein Verbindungsteil im zusammengefügten Zustand und das andere Verbindungsteil während des Zusammenfügens gezeigt ist; und
- Figur 8: eine den Figuren 4 bis 7 entsprechende Darstellung, wobei beide Verbindungsteile im zusammengefügten Zustand gezeigt sind.

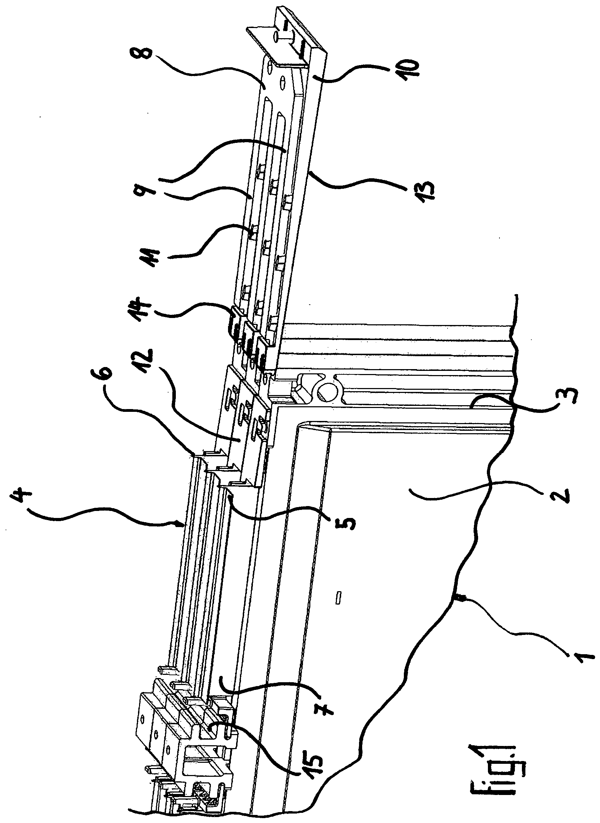

Jede der drei in Figur 1 gezeigten erfindungsgemäßen Batteriezelleneinheiten 1 dient dazu, mit weiteren gleichartigen Batteriezelleneinheiten 1 zu einem eine Vielzahl derartiger Batteriezelleneinheiten 1 aufweisenden Batteriemodul zusammengefügt zu werden.

Zu der Batteriezelleneinheit 1 gehören eine Batteriezelle 2, ein Zellrahmen 3 und Zellpole 4.

Die Batteriezelle 2 der Batteriezelleneinheit 1 ist in den Zellrahmen 3 der Batteriezelleneinheit 1 eingefügt, so dass die Batteriezelle 2 innerhalb des Zellrahmens 3 fixiert ist. Die Fixierung kann dadurch realisiert werden, dass die Batteriezelle 2 in den Zellrahmen 3 eingeklebt, eingeklemmt und/oder eingedrückt wird.

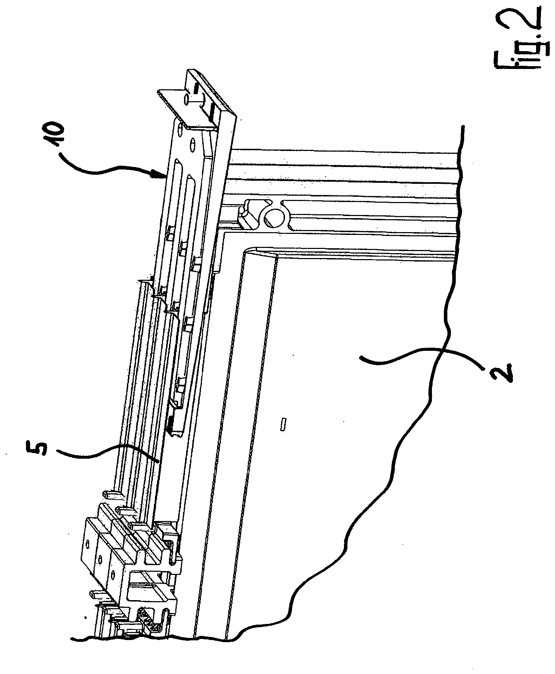

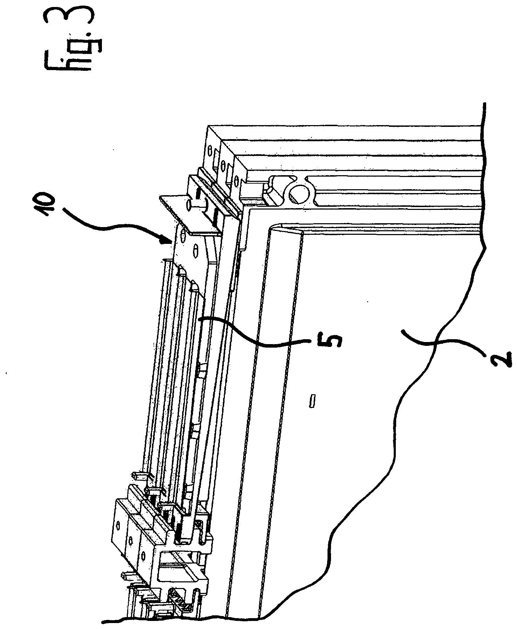

Der in den Figuren 1 bis 3 gezeigte Zellpol 4 jeder Batteriezelleneinheit 1 ist mit seinem batteriezellenseitigen Endabschnitt an die Batteriezelle 2 der Batteriezelleneinheit 1 angeschlossen. Mit seinem batteriezellenfernen Endabschnitt 5 steht der Zellpol 4 aus der Batteriezelle 2 der Batteriezelleneinheit 1 vor.

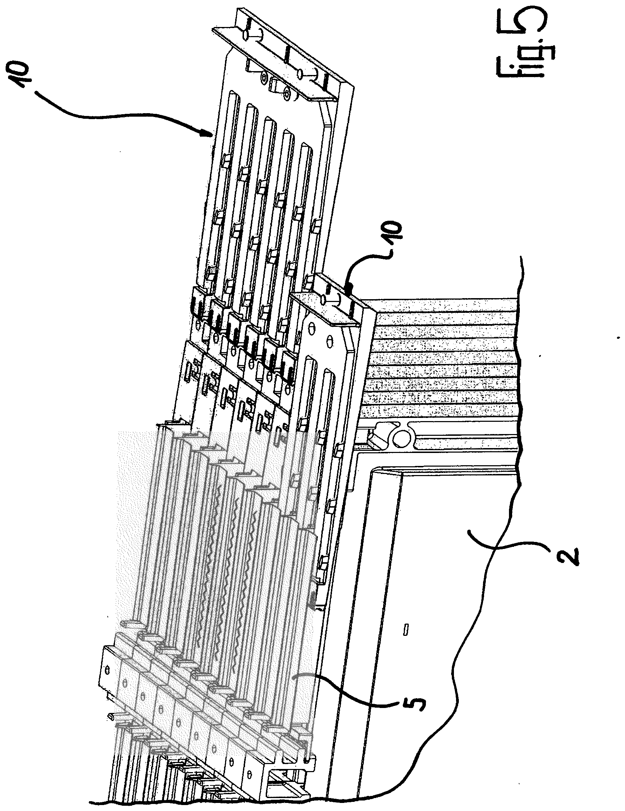

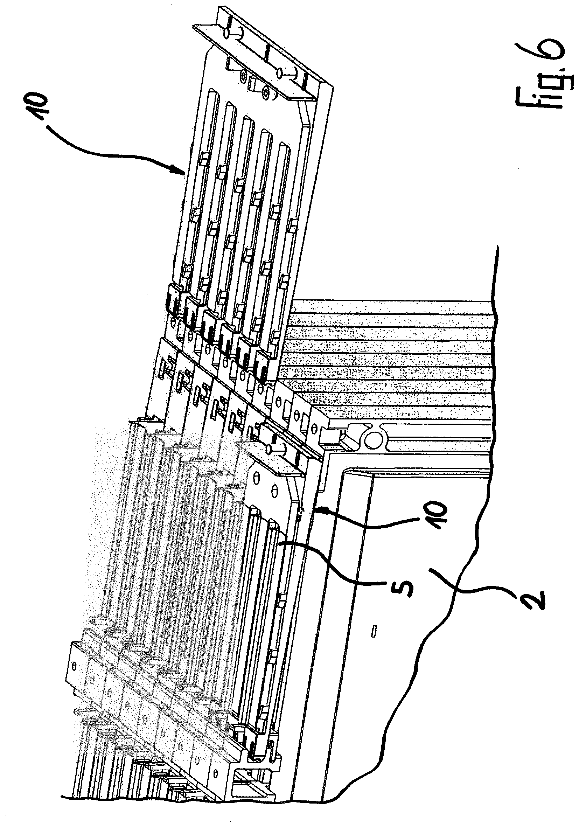

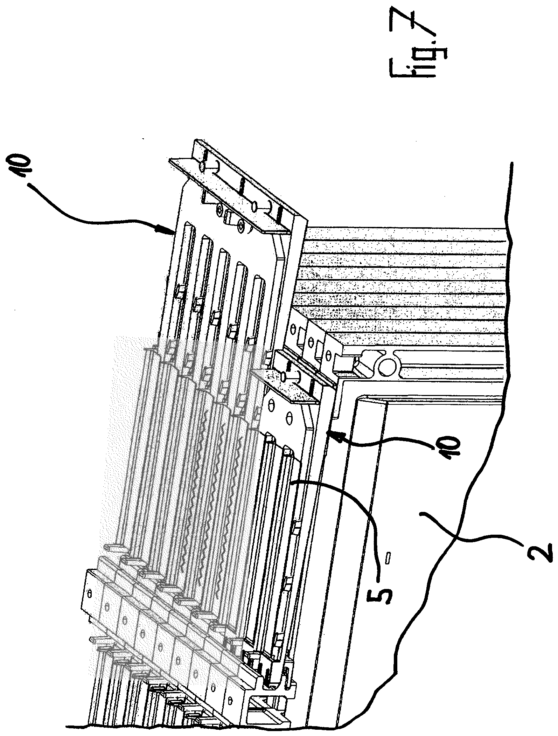

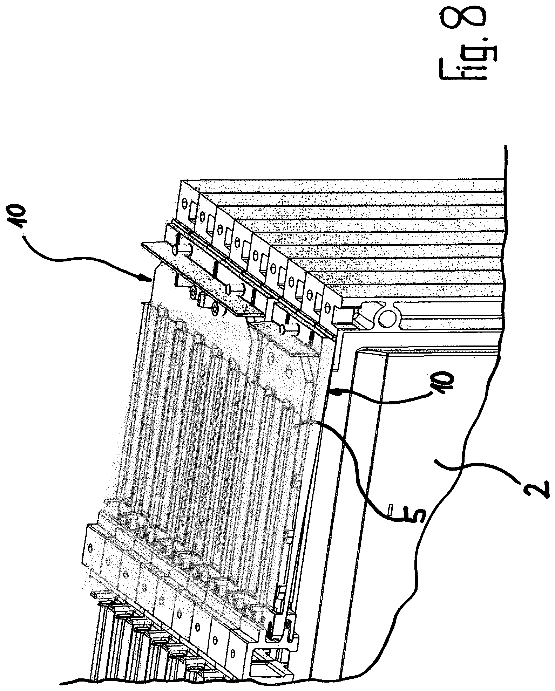

Im in den Figuren nicht gezeigten Auslieferungszustand ragt der Zellpol 4 mit seinem planen batteriezellenfernen Endabschnitt 5 aus der Batteriezelle 2 der Batteriezelleneinheit 1 vor. Zur Montage der Batteriezelleneinheit 1 wird der Zellpol 4 um 90 Grad gebogen, so dass der batteriezellenferne Endabschnitt 5 des Zellpols 4 in eine zur Hauptebene der Batteriezelle 2 senkrecht angeordnete Anschlussebene gebogen ist. In den Figuren 1 bis 8 ist der Zellpol 4 ausschließlich im bereits verbogenen Zustand gezeigt. Des Weiteren ist der in den Figuren 1 bis 8 gezeigte Zellpol 4 der Batteriezelleneinheit 1 jeweils mit einer Entlastungskontur 6 ausgestaltet, die zwischen einem parallel zur Hauptebene der Batteriezelle 2 aus dieser vorstehenden Abschnitt 7 des Zellpols 4 und dem hierzu rechtwinklig abgebogenen batteriezellenfernen Endabschnitt 5 ausgebildet ist.

Die Entlastungskontur 6 umfasst gekrümmte und planare Abschnitte und dient dazu, im zusammengefügten Zustand der Batteriezelleneinheit zu verhindern, dass Vibrationen etc. auf eine stoffschlüssige Verbindung, die zwischen den Zellpolen 4 einerseits und einem im Folgenden noch beschriebenen Verbindungsteil 8, mittels dem benachbarte Batteriezelleneinheiten 1 aneinander angeschlossen werden, andererseits zu übertragen.

Das in den Figuren 1 bis 3 gezeigte Verbindungsteil 8 ist geeignet, drei benachbarte Batteriezelleneinheiten 1 miteinander zu verbinden. Hierzu ist das Verbindungsteil 8 an seinen Anschlussabschnitten 9 in flächige Anlage an die Unterflächen der abgebogenen batteriefernen Endabschnitte 5 der Zellpole 4 bringbar.

Um eine über die gesamten Anschlussflächen gleichmäßige Anlage zwischen den Anschlussabschnitten 9 des Verbindungsteils 8 andererseits und den batteriezellenfernen Endabschnitten 5 der Zellpole 4 zu erreichen, wird im Falle der erfindungsgemäßen Batteriezelleneinheit 1 das Verbindungsteil 8 von der Seite her, wie dies aus den Figuren 1 bis 3 hervorgeht, so zwischen die Batteriezelle 2 der Batteriezelleneinheit 1 und den batteriezellenfernen Endabschnitt 5 des Zellpols 4 der Batteriezelleneinheit 1 eingeschoben, dass die flächige Anlage zwischen dem Anschlussabschnitt 9 des Verbindungsteils 8 und dem batteriezellenfernen Endabschnitt 5 des Zellpols 4 entsteht.

Hierzu ist im dargestellten Ausführungsbeispiel der erfindungsgemäßen Batteriezelleneinheit 1 das Verbindungsteil 8 an einem Aufnahmeteil 10 gehaltert, wobei das Aufnahmeteil 10 mit Rastgliedern 11 versehen ist, mittels denen das Verbindungsteil 8 fest an der Oberfläche des Aufnahmeteils 10 verrastbar und somit dort fixierbar ist.

In den Figuren ist das Verbindungsteil 8 jeweils im fest an der Oberfläche des Aufnahmeteils 10 verrasteten Zustand gezeigt.

Um beim seitlichen Einschieben des am Aufnahmeteil 10 verrastete Verbindungsteils 8 in die Batteriezelleneinheiten 1 diesen Einschiebevorgang ohne weiteres realisierbar zu gestalten und um sicherzustellen, dass am Ende dieses Einschiebevorgangs eine gleichmäßige Anlage zwischen den Verbindungsabschnitten 9 des Verbindungsteils 8 einerseits und den abgebogenen batteriezellenfernen Endabschnitten 5 der Zellpole 4 andererseits vorliegt, ist im dargestellten Ausführungsbeispiel der erfindungsgemäßen Batteriezelleneinheit am Zellrahmen 3 derselben ein Keilglied 12 angeordnet, das hinsichtlich seiner Neigung der Neigung einer schiefen Ebene 13 entspricht, die an der Unterseite des Aufnahmeteils 10 ausgebildet ist.

Beim Einschiebevorgang werden die Anschlussabschnitte 9 des Verbindungsteils 8 sukzessive an die batteriezellenfernen Endabschnitte 5 der Zellpole 4 angenähert, bis sie im vollständig eingeschobenen Zustand des Verbindungsteils 8 in flächiger Anlage an den batteriezellenfernen Endabschnitten 5 der Zellpole 4 sich befinden.

Im voll eingeschobenen Zustand des Aufnahmeteils 10 sind an dem eingeschobenen Ende des Aufnahmeteils 10 ausgebildete Eingriffsteile 14 in Eingriff mit an der Batteriezelleneinheit 1 vorgesehenen Aufnahmen 15.

Durch entsprechende Vorgaben für den Vertikalabstand zwischen den batteriezellenfernen Endabschnitten 5 der Zellpole 4 und den darunter angeordneten Oberkanten der Batteriezelle 2 bzw. des Zellrahmens 3 der Batteriezelleneinheit einerseits und die Vertikalmaße der Einheit aus Aufnahmeteil 10 und Verbindungsteil 8 andererseits wird sichergestellt, dass am Ende des Einschubvorgangs eine mit einem gewünschten Andruck realisierte Anlage zwischen den Anschlussabschnitten 9 und den batteriezellenfernen Endabschnitten 5 vorliegt, um dauerhaft einen ordnungsgemäßen Anschluss der Batteriezelleneinheiten 1 an das Verbindungsteil 8 zu gewährleisten.

Das batteriezelleneinheitsseitige Keilglied 12 kann einstückig mit dem Zellrahmen 3 der Batteriezelleneinheit 1 ausgebildet sein; alternativ ist es selbstverständlich möglich, das Keilglied 12 als am Zellrahmen 3 anmontierbares separates Bauteil auszugestalten.

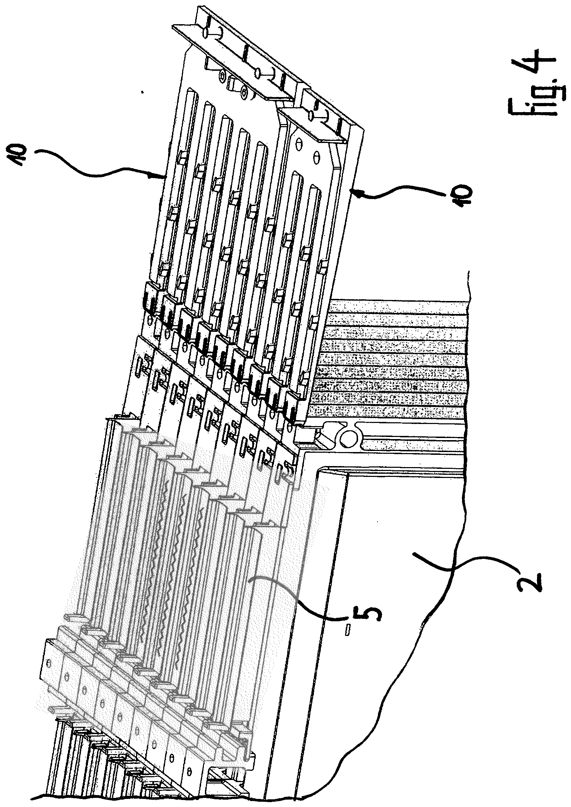

Eine anhand der Figuren 4 bis 8 gezeigte weitere Ausführungsform eines aus mehreren Batteriezelleneinheiten 1 zusammengestellten Batteriemoduls hat neun Batteriezelleneinheiten 1, die mittels zweier Verbindungsteile 8 aneinander angeschlossen sind, wobei das in den Figuren 4 bis 8 vordere Verbindungsteil 8 drei Anschlussabschnitte 9 und das in den Figuren 4 bis 8 hintere Verbindungsteil 8 sechs Anschlussabschnitte 9 aufweist.

Bei einer Demontage der Batteriemodule ist es möglich, die Verbindungsteile 8 durch einen seitlichen Ausziehvorgang von den Batteriezelleneinheiten 1 zu trennen, wobei dies selbstverständlich für sämtliche Ausführungsformen, wie sie in den Figuren 1 bis 8 gezeigt sind, gilt.

Das Verbindungsteil 8 liegt im montierten Zustand fest verrastet unter den batteriezellenfernen Endabschnitten 5 der Zellpole 4 der benachbarten Batteriezelleneinheiten 1. Mittels der aufnahmeteilseitigen schiefen Ebene 13 und den Keilgliedern 11 wird eine nachträgliche und ausgleichende Montage bzw. Demontage des Verbindungsteils 8 ermöglicht. Aufgrund des Zusammenwirkens zwischen der genannten schiefen Ebene 13 und den Keilgliedern 12 wird das Verbindungsteil 8 parallel und von unten an die batteriezellenfernen Endabschnitte 5 der Zellpole 4 herangeführt. Der allmähliche Höhenausgleich ist wesentlich für die zwischen den batteriezellenfernen Endabschnitten 5 der Zellpole 4 einerseits und den Anschlussabschnitten 9 des Verbindungsteils 8 andererseits herzustellende stoffschlüssige Verbindung. Derartige stoffschlüssige Verbindungen 16 sind beispielhaft in den Figuren 4 bis 8 gezeigt. Hierbei kann es sich insbesondere um Schweißnähte handeln.

## Patentansprüche

1. Batteriezelleneinheit für Batteriemodule, mit einer Batteriezelle (2), einem Zellrahmen (3), in den die Batteriezelle (2) eingefügt ist, einem Zellpol (4), der einerseits an die Batteriezelle (2) angeschlossen ist und mit seinem batteriezellenfernen Endabschnitt (5) aus der Batteriezelle (2) vorsteht, und einem Verbindungsteil (8), an das der batteriezellenferne Endabschnitt (5) des Zellpols (4) angeschlossen ist und mittels dem die Batteriezelle (2) mit benachbarten Batteriezellen (2) des Batteriemoduls verbindbar ist, **dadurch gekennzeichnet, dass** der batteriezellenferne Endabschnitt (5) des Zellpols (4) in eine zur Hauptebene der Batteriezelle (2) senkrecht angeordnete Anschlussebene gebogen ist, dass der batteriezellenferne Endabschnitt (5) mit seiner Unterfläche flächig an der ihm zugewandten Oberfläche des Verbindungsteils (8) in Anlage ist, dass unterhalb des Verbindungsteils (8) eine schiefe Ebene (13) ausgebildet ist, und dass zwischen der unterhalb des Verbindungsteils (8) ausgebildeten schiefen Ebene (13) und der Batteriezelle (2) bzw. deren Zellrahmen (3) ein Keilglied (12) sitzt, dessen Schräge betragsgleich und invers zur Schräge der unterhalb des Verbindungsteils (8) ausgebildeten schiefen Ebene (13) ist.

2. Batteriezelleneinheit nach Anspruch 1, bei der die unterhalb des Verbindungsteils (8) ausgebildete schiefe Ebene (13) die Unterfläche eines Aufnahmeteils (10) ist, auf dessen Oberfläche das Verbindungsteil (8) gehaltert ist.

3. Batteriezelleneinheit nach Anspruch 2, bei der das Verbindungsteil (8) mittels Rastgliedern (11) fest an der Oberfläche des Aufnahmeteils (10) verrastet ist.

4. Batteriezelleneinheit nach einem der Ansprüche 1 bis 3, deren Batteriezelle (2) im Zellrahmen (3) fixiert, vorzugsweise eingeklebt, eingeklemmt und/oder eingedrückt ist.

5. Batteriezelleneinheit nach einem der Ansprüche 1 bis 4, deren Keilglied (12) am Zellrahmen (3) montiert ist.

6. Batteriezelleneinheit nach einem der Ansprüche 1 bis 4, deren Keilglied (12) einstückiger Bestandteil des Zellrahmens (3) ist.

7. Batteriezelleneinheit nach einem der Ansprüche 1 bis 6, bei der zwischen einem parallel zur Hauptebene der Batteriezelle (2) aus dieser vorstehenden Abschnitt (7) des Zellpols (4) einerseits und dem hierzu rechtwinklig abgebogenen batteriezellenfernen Endabschnitt (5) des Zellpols (4) andererseits eine Entlastungskontur (6) ausgebildet ist.

## Claims

1. Battery cell unit for battery modules, comprising a battery cell (2), a cell frame (3) into which the battery cell (2) is inserted, a cell pole (4) connected to the battery cell (2) on one side and having its end portion remote from the battery cell (5) protrudes from the bat cell (2) and a connecting part (8) to which the end portion remote from the battery cell (5) of the cell pole (4) and by means of which the battery cell (2) can be connected to adjacent battery cells (2) of the battery module, **characterized in that** the end portion remote from the battery cell (5) the cell pole (4) into one to the main plane of the battery cell (2) vertically arranged end plane is bent so that the end portion remote from the battery cell is (5) with its bottom surface flat on the surface of the connecting part facing it (8) in abutment, that below the connecting part (8) an oblique plane (13), and **in that** between the lower-half of the connecting part (8) oblique plane (13) and the battery cell (2) or their cell frames (3) a wedge member (12) is seated whose inclination is equal to and inverse to the inclination of the inclined plane (13) formed below the connecting part (8).

2. Battery cell unit according to Claim 1, in which the oblique element (13) formed outside the connecting part (8) is the lower surface of a receiving part (10) on the surface of which the connecting part (8) is held.

3. Battery cell unit according to Claim 2, in which the connecting part (8) is firmly latched to the surface of the receiving part (10) by means of latching elements (11).

4. Battery cell unit according to one of Claims 1 to 3, the battery cell (2) of which is fixed in the cell frame (3), preferably glued in, clamped in and/or pressed in.

5. Battery cell unit according to one of Claims 1 to 4, the wedge member (12) of which is mounted on the cell frame (3).

6. Battery cell unit according to one of Claims 1 to 4, the wedge member (12) of which is an integral part of the cell frame (3).

7. Battery cell unit according to one of Claims 1 to 6, in which, between a portion (7) of the cell pole (4) projecting parallel to the main plane of the bat cell (2), on the one hand, and the end portion (5) of the cell pole (4) remote from the battery cell at right angles thereto, on the other hand, a relief contour (4).

## Revendications

1. Unité d'élément de batterie pour modules de batterie, avec un élément de batterie (2), un cadre d'élément (3) dans lequel l'élément de batterie (2) est inséré, un pôle d'élément (4) raccordé d'un côté à l'élément de batterie (2) et qui dépasse, avec sa partie d'extrémité éloignée (5) de l'élément de batterie (2), de l'élément de batterie (2), et une partie de raccordement (8) à laquelle la partie d'extrémité éloignée de l'élément de batterie (5) du pôle d'élément (4) est raccordée et au moyen de laquelle l'élément de batterie (2) peut être raccordé à des éléments de batterie (2) adjacents du module de batterie,
**caractérisée en ce que** la partie d'extrémité éloignée de l'élément de batterie (5) du pôle d'élément (4) est pliée dans un plan de liaison agencé perpendiculairement au plan principal de l'élément de batterie (2), que la partie d'extrémité éloignée de l'élément de batterie (5) est en contact surfacique, avec sa surface inférieure, avec la surface de la partie de raccordement (8) tournée vers elle, qu'un plan incliné (13) est formé en-dessous de la partie de raccordement (8), et qu'entre le plan incliné (13) formé en-dessous de la partie de raccordement (8) et l'élément de batterie (2) ou son cadre d'élément (3), un élément de calage (12) se trouve, dont l'inclinaison est de même ampleur et inverse à l'inclinaison du plan incliné (13) formé en-dessous de la partie de raccordement (8).

2. Unité d'élément de batterie selon la revendication 1, dans laquelle le plan incliné (13) formé en-dessous de la partie de raccordement (8) est la surface inférieure d'une partie de réception (10) sur la surface de laquelle la partie de raccordement (8) est maintenue.

3. Unité d'élément de batterie selon la revendication 2, dans laquelle la partie de raccordement (8) est encliquetée de manière fixe au moyen d'éléments d'encliquetage (11) sur la surface de la partie de réception (10).

4. Unité d'élément de batterie selon l'une des revendications 1 à 3, dont l'élément de batterie (2) est fixé dans le cadre d'élément (3), en particulier collé, serré et/ou enfoncé dedans.

5. Unité d'élément de batterie selon l'une des revendications 1 à 4, dont l'élément de calage (12) est monté sur le cadre d'élément (3).

6. Unité d'élément de batterie selon l'une des revendications 1 à 4, dont l'élément de calage (12) fait partie intégrante d'un seul tenant du cadre d'élément (3).

7. Unité d'élément de batterie selon l'une des revendications 1 à 6, dans laquelle, entre une partie (7) du pôle d'élément (4) dépassant de l'élément de batterie (2) parallèlement au plan principal de celui-ci d'une part et la partie d'extrémité éloignée de l'élément de batterie (5) du pôle d'élément (4) recourbée en angle droit par rapport à celle-ci d'autre part, un contour d'équilibrage (6) est formé.
